Europäisches Patentamt

European Patent Office

Office européen des brevets

(11) Publication number: **0 453 904 A1**

## EUROPEAN PATENT APPLICATION

(21) Application number: 91105842.8

(22) Date of filing: **12.04.91**

(51) Int. Cl.5: **H01M 6/52, A62D 3/00, C22B 9/02, C22B 7/00**

(30) Priority: **27.04.90 IT 1245490**

(43) Date of publication of application: **30.10.91 Bulletin 91/44**

(84) Designated Contracting States: **DE DK ES FR GB NL**

(71) Applicant: **ANSALDO S.p.A.**
**Piazza Carignano 2**
**I-16121 Genoa(IT)**

Applicant: **Costa, Bruno**
**Via Petrarca, 31**
**I-80122 Napoli(IT)**

(72) Inventor: **Die Erfindernennung liegt noch nicht vor**

(74) Representative: **Perani, Aurelio et al**
**c/o JACOBACCI-CASETTA & PERANI Via Visconti di Modrone 7**
**I-20122 Milano(IT)**

(54) **Method for disposing of run-down batteries and other waste products made toxic by the presence of heavy metals therein.**

(57) The invention relates to a method for disposing of run-down batteries and other, mainly metallic, waste products made toxic by the presence of heavy metals.

During an initial stage of the method, run-down batteries and the toxic compounds are introduced into a molten iron bath wherein, under a reducing medium, the metallic compounds are reduced to the metal state, and in this condition, partly dissolved through the molten iron and partly vaporized; the stable metallic compounds under reducing medium are instead absorbed to a slag generated by feeding a suitable scorifier into the molten iron bath.

EP 0 453 904 A1

This invention relates to a method and a system for disposing of run-down batteries and other waste products made toxic by the presence of heavy metals therein, by means of a reducing pyrolysis process in molten iron baths.

The disposal of run-down batteries in suitable and reliable establishments has become a necessity mainly on account of the presence therein of heavy metals (Hg, Cd) which are apt, either as such or in the forms of oxides or salts, to pollute the soil and, hence, water and food resources, being as they are positively harmful to human health.

Run-down batteries also contain organics, as well as such additional metals to the above-mentioned ones as: Ni, Cu, Zn, and Li, not to mention Mn and Ag oxides (button-type batteries) and hydroxides of alkaline metals (KOH, LiOH). The latter are, as is well recognized, highly reactive.

Due to the large number of the compounds present, the processes whereby the soil may become polluted are complex ones, to the point of making as thorough a removal as possible of suspicious substances prior to disposing of any residual matter a commendable practice.

Bacterial actions should be also taken into consideration, for instance, which might release harmful elements from otherwise highly stable compounds. Likewise, the large number of the metals and inorganic compounds present makes for disposal procedures which are both complicated and cost-intensive.

The current state of the art has provided heretofore no satisfactory solutions to the disposal problem which be also relatively inexpensive.

The techniques developed so far enable mercury to be separated by the application of heat to the material being processed up to a temperature which results in said metal being almost fully vaporized. Vaporization is promoted of preference by operating under a reduced pressure.

The Hg can then be recovered through a subsequent condensation step.

The above separation and recovery process only affects that Hg fraction which is present in a metal state, not the combined one as oxide or salt.

Other methods have been proposed which consist of a series of metallurgical-type processing steps, each adapted to treat one compound and possibly remove it; however, the complexity of the elemental operations involved and their cost cause the method to be discontinued on reaching a certain level of its complexity, thereafter a residue must be transferred to a repository the amount and composition whereof still make it a potential pollutant of some significance.

This invention is directed to overcome the difficulties outlined hereinabove by the provision of a method comprising plural processing steps to be applied serially to the material to be disposed of, and being characterized by peculiar chemio-physical conditions of operation for such steps which lead to appropriate changes, and the separation and removal of the system, as well as full recovery of the compounds thus far employed in the manufacture of batteries, thereby ensuring that the residual matter will be truly fit for disposal.

The method of this invention is implemented, during its initial stage, at a high temperature (1600° C) and includes at this stage three process steps wherein the treatment and separation proper into different phases of elements and compounds will take place.

During the first of the three initial steps, those reactions occur which cause the combination states of many of the compounds contained in the material making up run-down batteries to change. During this step, for example, that portion of the heavy metals which was originally present in a combined state with oxygen or in some other forms, are reduced to a purely metal state.

In the course of the second of the initial steps, there takes place the separation, as by sluicing, of the compounds and elements in their various phases present in the system.

During the last of the three steps in the first process stage, the elements and compounds from the first step and separated in the second are taken out.

During the second stage of the disposal method herein proposed, treatment steps are applied to the individual streams of materials which ensure that the residues will be environmentally compatible. Prior to discharging, an intense recovery is performed of the compounds of interest, either on account of their harmfulness or their commercial value.

This invention is concerned with a process capable of effecting a multiplicity of transformations and a multi-step separation of the products from such transformations on run-down batteries and other toxic and harmful materials also characterized by the presence of heavy metals therein, the appropriate conditions to this aim having been found in those provided by a bath of molten iron at a temperature of about 1600° C and containing a high proportion of carbon with respect to the saturation content.

The invention is also directed to provide dual capability of energy balance in the system, as afforded in one case by the energy generated within the system itself when supplied with oxygen and coal, and in the other case, by heat application through electromagnetic induction heating means.

Another object of the invention is to remove the harmful components, namely Hg, Cd, Zn heavy metals, in a practically complete way, by fractioned condensation thereof on a reducing stream of gas carrying said metals; the ultimate recovery in metal form is also extended to include that proportion of said metals which is present originally in the forms of compounds.

A further major object of this invention is to minimize the residual content of the above-noted metals and that of other harmful components contained in the gas stream which has been used for transporting the txic metals in the vapor state. Said object is achieved by an oxidation treatment followed by a dust collection one. In another way, this same object is achieved or enhanced by minimizing the amount of gas produced with respect to the input of material to the system for its processing.

The essential features of the method and the system herein are set forth in the claims, and moreover, their subject-matters and advantages can be more clearly understood from the detailed description that follows with specific reference to the accompanying drawings, where:

Figure 1 is a general diagram illustrating the first stage of this process;

Figure 2 is a half-sectional view taken through a reactor in which the first stage of this process is carried out;

Figure 3 shows a graph whereon the values of the free standard energy from the formation of different oxides are plotted versus temperature;

Figure 4 is similar to Figure 1, but also depicting in diagramatic form the second stage of this process; in addition, this figure shows schematically the component of a system or plant for implementing the inventive method;

Figure 5 shows in graphic form the vapor pressure pattern of the various undesired metals versus temperature; and

Figure 6 shows a variation of the layout in Figure 4.

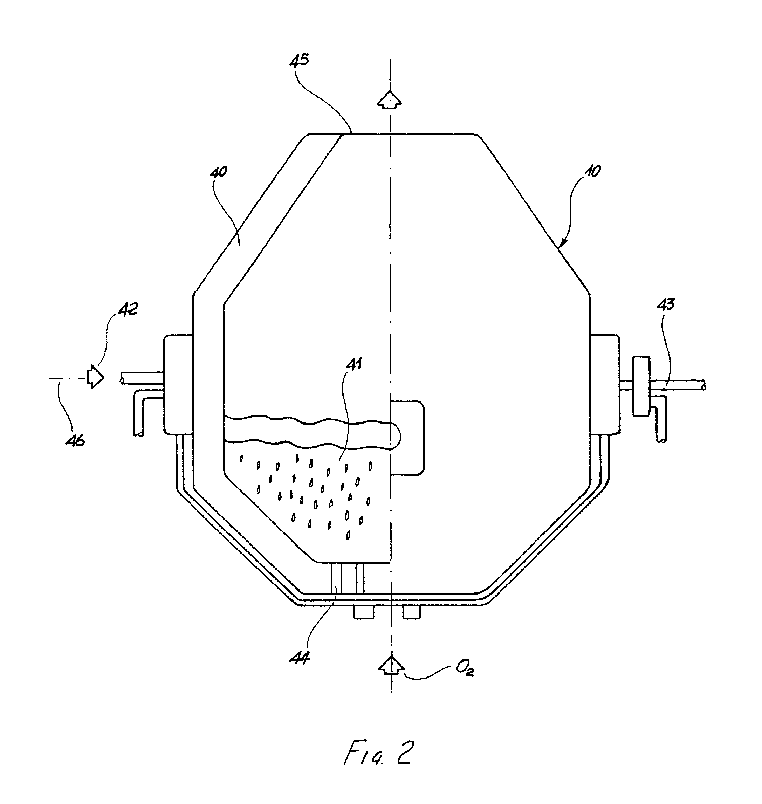

According to the method of this invention, the rundown batteries would be loaded into a heat-insulated reactor 10, shown in Figure 2, which contains molten iron along with a suitable amount of coal.

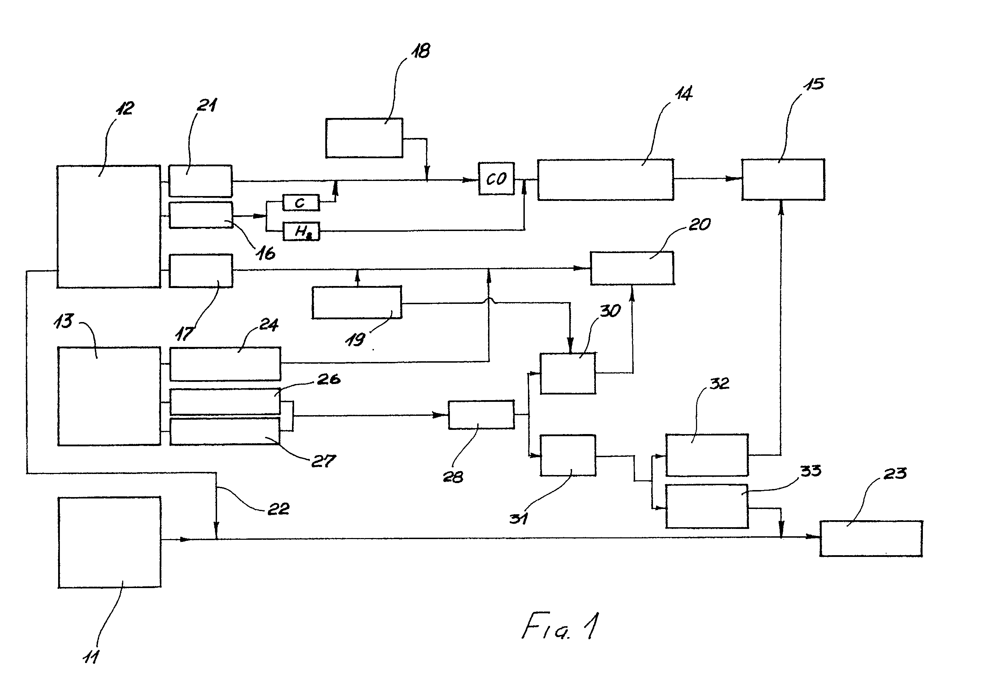

The physical system prevailing within said reactor is depicted schematically in Figure 1 and comprises, initially, the molten iron (11), coal (12), and run-down batteries (13).

The temperature of the molten iron is of 1600°C at the start and its mass is nearly one order greater than the mass of the added components; accordingly, the temperature can be maintained to be on the average equal to the above-specified value and follow a steady pattern over time when, during the time between successive additions, the amount of heat required for smelting and the other transformations is accommodated by the heat released by the carbon combustion (C into CO), as previously calculated and dedicated for the purpose.

Alternatively, said amount of heat may be supplied from outside by electromagnetic induction heating.

The treatments undergone by the three basic components are as follows.

The carbon introduced into the molten iron has a solid phase 21 which, in the presence of oxygen supplied from 18, will be turned into carbon monoxide, constituting one of the reducing gases 14 which will ultimately compose the resulting gas phase 15.

The coal loaded into the reactor 10 also contains carbon-and hydrogen-based volatile matter 16. The former will combine with the oxygen and flow into the group of reducing gases 14 together with the hydrogen.

Ashes 17 are transformed, by the addition of lime 19, into one component of slag 20. Some of the carbon from the coal 12 is dissolved through the iron 11 as schematically indicated by line 22 to yield one of the alloying components that will ultimately comprise the metal phase 23.

The run-down batteries 13 contain a fraction of stable oxides 24, of low density relatively to iron, thereby they will gather naturally into the slag 20. Said run-down batteries 13 further contain reducible oxides 26, which will be reduced to metals 28 on account of the reducing medium provided by the carbon monoxide.

This liquid metal phase also includes those elements 27 which were already present in a metal state in the run-down batteries 13.

The metals 28 are partially oxidized into stable, and hence non-poisonous, oxides in the presence of the lime 19, the molten iron, and the carbon dissolved through the latter.

All such oxides 30 will gather into the slag 20.

The diagram in Figure 2 shows the first two steps of the first stage of this process, that is change of the combined state of the compounds contained in the run-down batteries and separation, as by sluicing, of the compounds and elements from the first step into the three gaseous, solid, and liquid phases 15, 20 and 23, respectively.

The term "solid phase" applies here to the "slag", although the latter, liquid at first, will only become fully solidified after being separated from the molten bath over which it floats.

The slag includes oxides of the following elements: Si, Al, Ti, B, V, Li, Ca, and Mg.

Said oxides, and specifically the lithium oxide to be found in batteries, will pass directly into the slag phase 20.

Those elements which will dissolve completely through the iron bath are the following: Cu, Ni, Sn, Mo, Co, W, Ag, and Sb; the first two are normally present in run-down batteries.

Furthermore, there are elements which do not distribute themselves between the slag phase and the molten iron, namely: Mn, P, S, and Cr; the first of these does appear in run-down batteries, but is harmless to human health.

Most important are those elements which, at least in part, are neither to be found dissolved in the molten iron nor conglomerated with the slag, but appear in the gaseous phase, namely: Zn, Cd, Pb, Hg, and Ag.

In the method of this invention, the gas phase is processed such that said metal elements will retain their metallic form with no appreciable oxidation.

With reference to Figure 2, the two initial steps discussed with reference to Figure 1 are carried out within a similar reactor to the one employed for a coal gasifying process in a bath of molten iron.

Said process, which is known, concerns production of a medium calorific value gas useful in a combined combustion cycle for electric power generation.

Said process provides for the introduction of suitable amounts of coal into a molten iron bath; according to that process, the partial oxidation of coal meets the heat demand for maintaining the required temperature.

Said process results in the production of a markedly reducing gas mixture mainly comprised of hydrogen and carbon monoxide, plus carbon dioxide in negligible amounts.

The reactor 10 shown in Figure 2 is lined with a refractory material 40 and contains iron 41 in the liquified state wherein carbon is present in solution having a by-weight concentration of about 4.5 percent.

The carbon is fed into the reactor 10 through a conduit 42, coaxial with the reactor pivot axis.

The lime is fed through a conduit 43, whilst the oxygen is preferably bottom fed by means of conduits 44 which are passed through the thickness of the refractory lining 40.

The run-down batteries can be loaded, preferably in a crushed condition, into the reactor 10 through either conduit, 42 or 43, or some other similar conduit. From the mouth 45 of the reactor 10 there will flow out the gaseous products and, after pivoting the reactor partway about the axis 46, also the molten compounds and the slag.

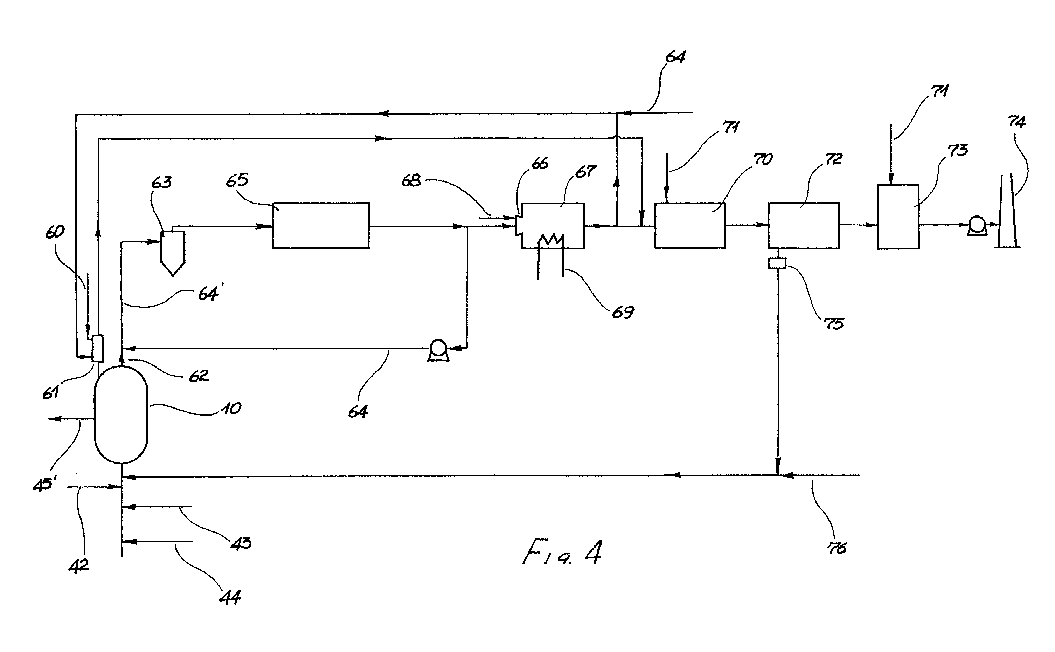

Shown in Figure 4 are the reference numerals 10, 42, 43, 44 and 45'. The last-mentioned numeral designates the slag outlet.

The batteries, as previously dried, or the material provided by the crushing step and also in the dried state, are fed in from a container 61.

On the batteries or fractions thereof being poured into the molten iron bath, a gas phase will issue therefrom which also includes metal Hg, Cd, and Zn as originally contained in the batteries.

The metal phase undergoes instead a progressive build-up of Cu and Ni.

This build-uphas an effect in a significant lowering of the solubility of carbon in iron with copper and nickel concentrations within the range of about 10 to 15 percent.

Elements like manganese, present in the batteries, raise the solubility of carbon and counteract, therefore, the effect of copper and nickel.

After a high concentration of copper and nickel is reached, the metal phase may be utilized to advantage for producing ferroalloys.

In the light of the apportionment scheme shown in Figure 1, and to consider the other elements contained in run-down batteries, it is observed that Mn is distributed between the slag and the iron, whilst compounds are formed within the slag of the types of silicates and aluminates of the alkaline metals, such as K and Li, and complex saltscontaining said metals and other metals from the ashes and the addition of lime.

When taking into account the additivated amounts, the proportion of ashes contained in the coal, and the concentration of alkaline metals in the run-down batteries, the conclusion is that, with the method of this invention, the level of K and Li compounds to be usually found in blast furnace slag will not be exceeded to any appreciable extent; thus, the slag issuing from the reactor 10 in which run-down batteries have been processed, takes on solidifying the appearance of a non-leachable vitreous material.

Because of the separation performed in the process of this invention, all doubts are dispelled of the presence of harmful elements in this slag, which constitutes, therefore, a residual matter usable for the same purposes as furnace slag.

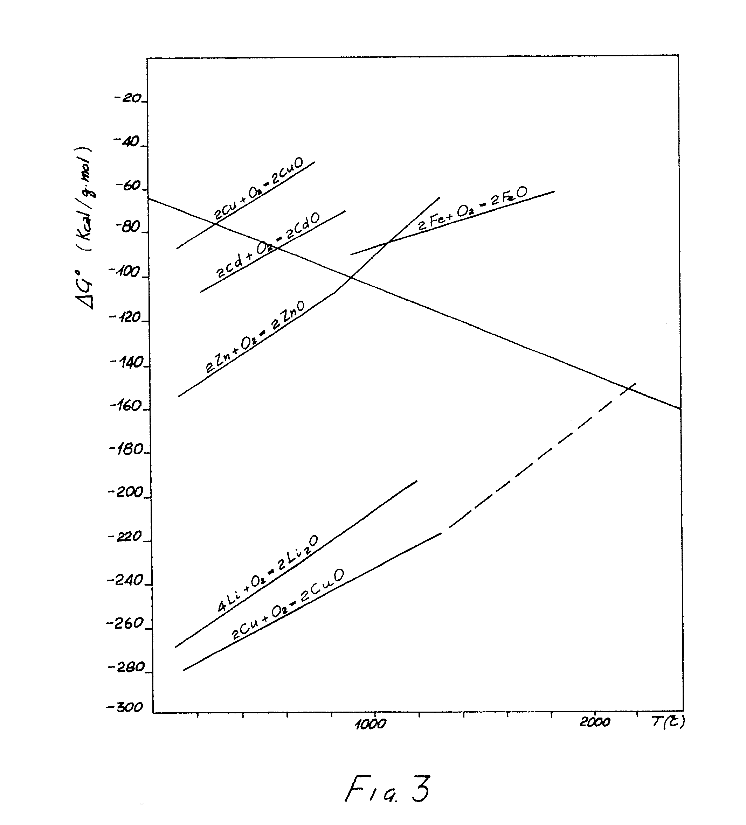

For a clearer understanding of the fundamentals of the transformations and separations undergone by the original components of the batteries, reference can be made to the graph in Figure 3.

Plotted on this graph versus temperature ($^\circ$C) are values of the standard free energy from the formation of several oxides (delta $G^\circ$ in kcal/gmol). Proceeding from above downwards, for a selected temperature, the stability of the oxides increases. This is expressed by the absolute value of delta $G^\circ$.

From the positions of the lines for Cu, Ni, Zn, Cd, Hg, and Ag relatively to that of Fe, it can be inferred that iron effects a reducing action on said metals. This explains the presence of Cu and Ni in the bath, even where oxidation reactions occur on other elements like Mn. Within the bath, the oxidation of copper and nickel is practically prevented by the presence of iron; the same applies also to Zn, Cd, Hg, and Ag. The gradients of the lines vary at the state transition points.

The gasification process which takes place in the reactor on adding coal and oxygen is expressed by reaction (1) below.

$$C + 1/2 * O_2 = CO \quad (1)$$

In the graph of Figure 2, the relation delta $G° = f(T)$ is shown along with those for the other oxides.

The decreasing pattern due to the positive entropy value makes it readily identifiable.

Consider the line corresponding to value $P_{CO} = 1$. Above this line, the points representing the reactions affecting the other oxides, given that reactions of the type of (2) herein below take place along with the reaction of the type of (1),

$$MO_x = M + x/2 * O_2 \quad (2)$$

indicate that the metal is in the reduced form: M.

As temperature is raised, increasingly more numerous become the oxides which can be reduced when reaction (1) is made to occur in the liquefied iron.

Also identifiable on the graph of Figure 3 are those oxides which, due to their stability, are not reduced at the process temperature and will reappear in the slag phase (LiO, CaO, ...).

To complete the illustration of the separation scheme applied to the process, therefore, the metals whose oxides have low stability, and result accordingly from the reduction effected by reactions (1) and (2) viewed concurrently, should be further divided from those that stay combined with $O_2$.

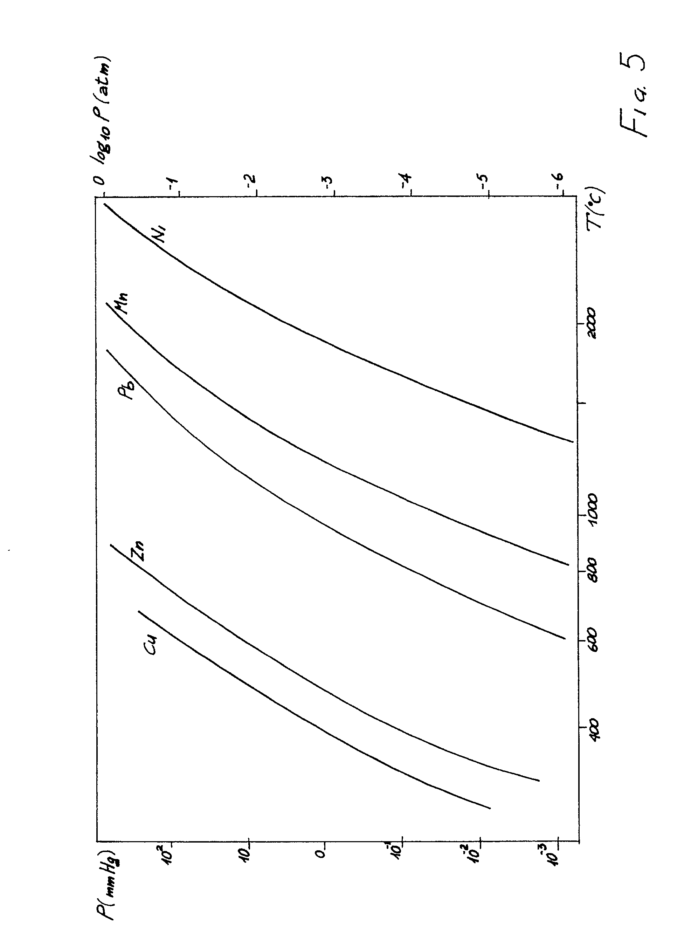

A further subdivision of the elements which have been reduced to the metal condition can be clearly appreciated from the graph of Figure 5, showing the remarkably different behaviors of NI and Cu, due to their vapor pressures being much lower than atmospheric, from those of Cd, Zn, and Hg which are highly volatile and in the vapor state at the temperature of 1600°C.

It will be understood from the foregoing description that the more harmful components are to be found in the gas phase.

Again with reference to Figure 4, in accordance with this invention, the gas stream (62) containing the Hg, Cd, and Zn vapors and being comprised of reducing gases is effective to take said metals out without the latter undergoing any significant oxidation.

In view of the low concentration of sulphur in the gas, moreover, the formation of sulphides is negligible. Immediately on exiting the reactor and ahead of the next gas processing unit 63, another gas stream 64 introduced at a low temperature (200°C to 400°C) into current 62 will lower the temperature of the latter such that the resulting stream 64' be at a temperature of about 1000°C.

Gas stream 64 consists of a gas which has been recycled and has reducing characteristics. Thus, gas stream 64' is still a reducing gas.

With reference to the graph shown in Figure 5, and leaving out the Li that as mentioned above is in the oxidized form in the slag, it can be seen that the highest boiling temperature (908°C) is that of zinc and that the range wherein it is in a liquefied state extends to about 420°C. It should be noted that the boiling temperature is lower than that at the intersection of the line indicative of reaction (1) with the line indicative of the oxidation of Zn, which takes place at about 950°C.

It follows from the above that Zn in the vapor state appears in a reduced form, but that there exists a range of about 50°C above the boiling point wherein oxidation is possible even under the prevailing physical conditions (pCO = 1; $P_{O2}$ = 0.5.
$P_{O2} = 0.5 * 10^{-19}$ at T = 950°C).

Thus, chilling and the possible addition of a high-purity $CO_2$-free inert gas are required to yield the Zn in the liquefied metal state.

This condition applies neither to Cd nor Hg; accordingly, their condensation to the state of liquefied metal is feasible under the conditions specified hereinabove for the carrier gas. The metal recovery section has three cyclones (65) with side walls cooled to a temperature within the range of 800°C to 900°C, in the first (for the recovery of Zn), 650°C to 750°C in the second, which recovers the Cd, and 250°C to 350°C in the third, wherein the Hg is condensated. The bottoms of these cyclones are connected to containers, also thermostatically controlled. A hydraulic seal provided by the metals themselves prevents the gas from leaking out.

Some of the gas issuing from the cyclones 65 is led, over the line 64, to admix with line 62. The remaining fraction is fed into a combustion chamber 67.

The recovery of heavy metals, which constitutes an objective of this invention, can be extended to such values as to leave in the carrier gas an acceptable residual content irrespective of its end destination.

In view of that the carrier gas is burnable, being composed of CO and hydrogen, the next final treatment will be described herein below.

Downstream from the heavy metal recovery unit 65, the gas temperature is of 250°C. The gas is then conveyed to an ejector 66 located at the inlet to the combustion chamber 67.

Pressurized combustion air 68 represents the primary fluid of said ejector, with the reducing gas constituting the fluid which is drawn in in this way. Shown at 69 is a sensible heat recovery arrangement.

The dust comprising the various metal oxides, present in the fumes, is collected at 75; it is then carried away by an inert gas stream 76 and cycled back into the reactor 10.

The method as described thus far is characterized, as relates to production of the energy required, by the utilization of the enthalpy of reaction (1).

This energy will serve all the transformations which take place through the proposed method, that is heating the carrier gas, dissociating the compounds from the batteries and the coal ashes, vaporizing the metals, etc.

The complete method setup is that shown in Figure 4.

With said type of operation, to be referred to as autothermal, the system is fed coal and oxygen to thereby supply the required energy. The amount of the gas yielded is in the range of 1 $Nm^3$ to 1.5 $Nm^3$ per kilogram of processed material. Purification of the gas produced is ensured by the above-described arrangement.

To complete the description of Figure 4, from the line 60 the run-down batteries are fed in which, prior to introduction into the reactor 10, would be heated in the chamber 61 by means of the burned gas stream 63, as tapped off downstream from the combustion chamber 67 and admixed with air 64.

The gas stream 65 issuing from chamber 61 is admitted upstream of the cooling unit 70.

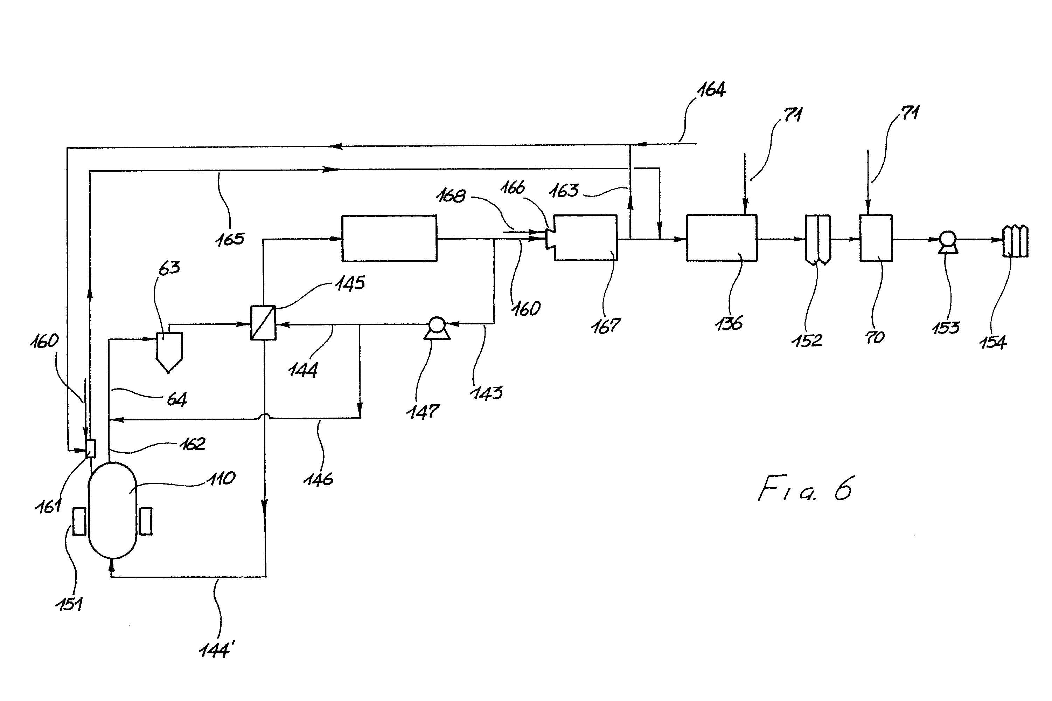

A different embodiment of this method which affords a significant reduction in the gas generated is shown in Figure 6. This is referred to as "allothermal" since the required energy must be supplied here in the form of electric power.

The heating procedure provided by this embodiment of the invention is an electromagnetic one by induction.

Shown at 110 in Figure 6 is the reactor which contains the iron maintained in the liquefied state by means of induction heaters indicated at 151. The carbon present in the molten iron is provided in a by-weight proportion of about 4.5 percent.

Within said reactor stirring is provided, aside from the electromagnetic heating, by a suitable flow rate of inert gas ($N_2$, $CO_2$) injected through (142). The dissolution and other changes in the material comprising the batteries are to be achieved when said flow rate ($Qr$) reaches at least 0.15 $Nm^3$ per minute/tonne of liquefied metal. Tied to the value of the injected flow rate is, in a manner known from metallurgy, the quantity referred to as stirring intensity, which is measured by means of an experimental parameter (thorough mixing time).

According to this invention, a thorough mixing time is considered to be necessary which does not exceed 1.5 times the minimum one. The flow rate value specified above meets this condition. The gas flow 143 dedicated to bath stirring is tapped off downstream from the heavy metal recovery unit 165 and is referred to as the recycle flow rate.

Downstream from the compressor 147, said recycle flow rate 143 is divided into two portions, one 144 of which is passed into the heat exchanger 145, where it will reach a temperature in the 600° C to 800° C range; it is then supplied to the bottom of the reactor 110 through line 144'.

The other portion 146 is injected into the outlet conduit 162 and causes the temperature to drop down to about 1000° C.

The residual flow of gas exiting the condensing cyclones 165, and having a much decreased rate 160, is drawn into the ejector 166 by means of the air 168 and delivered to the combustion chamber 167.

In order to have the run-down battery material, as introduced by 160, dried, burned gases 163 are injected into the container 161 as tapped off downstream from the combustion chamber 167 and admixed with air 164.

The gas issuing from 165 is re-introduced into the process conduit upstream of the cooling unit 136.

While for illustrative purposes this invention has been described in relation to embodiments thereof as discussed in the foregoing, the invention may be embodied in many other ways within the scope of the appended claims.

## Claims

1. A method for disposing of run-down batteries and other waste products made toxic and harmful by the presence of heavy metals therein, characterized in that it comprises a reducing pyrolysis treatment in a molten iron bath (41).

2. A method for disposing of rundown batteries and other waste products made toxic and harmful by the presence of heavy metals therein, according to Claim 1, characterized in that, during a first stage of the method, the run-down batteries and toxic compounds are introduced into a molten iron bath (41) where, in a reducing medium, the metallic compounds are reduced to the metallic state, and in this state, partly dissolved through the molten iron and partly vaporized; and wherein the stable metallic compounds under reducing medium are absorbed to a slag generated by feeding a suitable scorifier into the molten iron bath (41).

3. A method for disposing of run-down batteries and other waste products made toxic and harmful by the presence of heavy metals therein, according to Claim 2, characterized in that the gaseous products from the reducing reaction generated by the introduction of the run-down batteries into the molten iron bath (41) are transferred to a fractioned condensation process to selectively condensate the various metals vaporized.

4. A method for disposing of run-down batteries and other waste products made toxic and harmful by the presence of heavy metals therein, according to the preceding claims, characterized in that a proportion of carbon of about 4.5% by weight is maintained in the molten iron bath (41) by the addition of metered amounts.

5. A method for disposing of run-down batteries and other waste products made toxic and harmful by the presence of heavy metals therein, according to the preceding claims, characterized in that the temperature of the molten iron bath is maintained in the 1600° C range by the injection of oxygen and consequent combustion of the carbon contained in the molten iron and whose by-weight percentage is restored periodically.

6. A method for disposing of run-down batteries and other waste products made toxic and harmful by the presence of heavy metals therein, according to Claims 1 to 4, characterized in that the temperature of the molten iron bath (41) is maintained in the 1600° C range by the inductive application of heat.

7. A method for disposing of run-down batteries and other waste products made toxic and harmful by the presence of heavy metals therein, according to the preceding claims, characterized in that the metal phase, as continuously enriched with such metals as copper and nickel held in the dissolved state through the molten iron, is periodically replaced with a liquid phase comprising molten iron which contains 4.5% by weight of carbon in solution.

8. A method for disposing of run-down batteries and other waste products made toxic and harmful by the presence of heavy metals therein, according to the preceding claims, characterized in that the gas mixture from the reaction between the compounds contained in the run-down batteries is cooled from about 1500° C down to about 1000° C by admixture with a reducing and/or inert gas at a temperature in the 200° to 600° C range.

9. A method for disposing of run-down batteries and other waste products made toxic and harmful by the presence of heavy metals therein, according to the preceding claims, characterized in that the gas mixture from the reaction, under reducing medium, of metallic compounds with molten iron is cooled by admixture with an inert and/or reducing gas mixture (76) at a temperature in the 200° to 600° C range, subjected to fractioned condensation for removing the vaporized metals, and then partly utilized as a gas mixture for cooling the reaction gaseous products, and for the remaining part, transferred to additional purifying, filtering, and possibly storing steps.

10. A method for disposing of run-down batteries and other waste products made toxic and harmful by the presence of heavy metals therein, according to Claim 9, characterized in that the dust products from the purifying and filtering steps are cycled back to the pyrolysis reaction in the molten iron bath (41).

11. A method for disposing of run-down batteries and other waste products made toxic and harmful by the presence of heavy metals therein, according to Claim 9, characterized in that the dust products from the purifying and filtering steps are separated and stored.

12. A method for disposing of run-down batteries and other waste products made toxic and harmful by the presence of heavy metals therein, according to the preceding claims, characterized in that, for the treatment of the gas released from the dust and the vapors of the heavy metals, arrangement is made to have said gas burned with air in a combustion chamber whereinto pressurized air is admitted to an ejector, said arrangement being also effective to draw in the gas, thereby avoiding the need for more complex equipment, and the combustion being effective to re-oxidize the residual metal fractions still contained in the gas stream.

13. A method for disposing of run-down batteries and other waste products made toxic and harmful by the presence of heavy metals therein, according to the preceding claims, characterized in that some of the gas, as diluted with air and cooled by the latter to a temperature of about 200°C, is injected in counter-current into the container of material yet to be processed in suitable size to allow for the drying thereof prior to its introduction into the molten iron bath.

14. A method for disposing of run-down batteries and other waste products made toxic and harmful by the presence of heavy metals therein, according to the preceding claims, characterized in that, for the removal of residual dust from the gas stream exiting said combustion chamber, there are provided a cooling step with water jets followed by a dust-removal step to be carried out by electrofilters or other means, said steps being then followed by a further cooling step down to temperatures below 80°C; said treatment being effective to bring the overall dust content down to negligible values acceptable by the environment.

15. A method for disposing of run-down batteries and other waste products made toxic and harmful by the presence of heavy metals therein, according to the preceding claims, characterized in that the slurries from the fume scrubbing step are dried and then fed back into the reactor.

Fig. 1

Fig. 2

Fig. 3

Fig. 4

Fig. 5

Fig. 6

EP 0 453 904 A1

**European
Patent Office**

**EUROPEAN SEARCH
REPORT**

Application Number

**EP 91 10 5842**

## DOCUMENTS CONSIDERED TO BE RELEVANT

| Category | Citation of document with indication, where appropriate, of relevant passages | Relevant to claim | CLASSIFICATION OF THE APPLICATION (Int. CI.5) |
|---|---|---|---|
| X | JAPANESE PATENTS ABSTRACTS, WORLD PATENTS ABSTRACTS, week 8943, 6th December 1989, A-M Chemical, page 5, accession no. JO 1228-586-A, Derwent Publications Ltd, London, GB; & JP-A-89 228 586 (NIPPON JIRYOKU SENK) 12-09-1989 — — — | 1,2,9,12 | H 01 M 6/52 A 62 D 3/00 C 22 B 9/02 C 22 B 7/00 |
| X | US-A-4 574 714 (R.D. BACH et al.) * Column 6, lines 28-50; column 7, line 64 - column 8, line 15; column 10, line 48 - column 11, line 58 * — — — | 1,4-6 | |
| X | EP-A-0 158 627 (VOEST-ALPINE) * Page 2, lines 1-4; page 3, line 16 - page 4, line 23; page 6, lines 1-18 * — — — | 1,5,6 | |
| A | US-A-4 695 447 (C.G. SCHULTZ) * Column 2, lines 35-63; column 3, lines 28-68; column 4, line 62 - column 5, line 2 * — — — | 1-3,6 | |
| X | JOURNAL OF POWER SOURCES, vol. 28, nos. 1/2, November 1989, pages 85-91, Lausanne, CH; J. KIRCHER: "Lead recycling technology" * The whole article * — — — — — | 1,2,9-12, 14,15 | TECHNICAL FIELDS SEARCHED (Int. CI.5) A 62 D C 22 B H 01 M |

The present search report has been drawn up for all claims

| Place of search | Date of completion of search | Examiner |
|---|---|---|
| The Hague | 02 August 91 | FLETCHER A.S. |